# EUROPEAN PATENT APPLICATION

(11) **EP 3 702 990 A1**
(43) Date of publication of application: **02.09.2020**
(21) Application number: 19160075.8
(22) Date of filing: 28.02.2019
(51) Int. Cl.: G06Q 20/32, G06Q 20/34, G07F 7/10

(54) **CHANGE OF REFERENCE PIN CODE VALUE OF SMART CARD BY A MOBILE DEVICE AND A DISTINCT TELECOMMUNICATION DEVICE**

(71) Applicant: Equensworldline S.E., 3526 LB Utrecht (NL)
(72) Inventor: GEIGENMULLER, Ulrich, 3823 CM Amersfoort (NL); DE GROOT, Cornelis, 4841 AJ Prinsenbeek (NL); VAN KEMP, Ronald, 1215 EE Hilversum (NL)
(74) Representative: Novagraaf Technologies

(57) **Abstract**

This invention relates to a server (S) comprising means configured to
- receive (S4) first transaction information from a browser executing on a distinct telecommunication device (DD);
- receive (S5) a PIN code;
- generating (S6) at said server (S) a script coding the change into said new PIN code and containing said new PIN code encrypted with a session key based at least on an element predicted from said selected part;
- transmit (S7, S8, S7a) said script to the mobile telecommunication device (MD).

## Description

### FIELD OF THE INVENTION

The invention relates to the fields of smart cards management, like credit cards or other payment cards and how to change a PIN code associated to them. It particularly addresses smart cards compliant with the EMV standards.

### BACKGROUND OF THE INVENTION

Smart cards, and especially payment cards compliant with the EMV standards, are associated with authentication methods based on PIN (Personal Identification Number) code.

Such EMV-compliant cards come with two authentication methods: an offline mode and an online mode.

In the online mode, the cardholder enters the PIN on a transaction apparatus (ATM, Point of Sale terminal...), which encrypts it and transmit it, together with a so-called PIN Verification Value, PVV, to a server of the issuer of the card. The server can then check the validity of the entered PIN code according to the PVV stored in the card.

In the offline mode, the transaction apparatus transmits the entered PIN code to the card itself, which beholds a chip configured to compare the received PIN code to a reference PIN code stored inside a memory of the chip.

There is a desire of cardholder to personalize the PIN code. Even, some card service corporations like Mastercard and Visa encourage issuers to offer cardholders a possibility to select their own PINs.

If the cardholder wants to select the PIN before the personalization of the card, it may be sufficient to offer a facility to communicate the selected PIN to the issuer in a secured way.

However, changing the PIN after the personalization of the card implies to update the PVV and the reference PIN so that they match the new PIN code.

In online mode, the authorization requests anyway flows to the server of the card issuer. So, even if the PVV inside the card is not modified, a piece of code inside the server may be put in place so as to override the legacy behavior and check the entered PIN code in view of a PVV stored at the server (which can be easily modified), instead of the PVV stored in the smart card.

In offline mode, such an overriding mechanism is not possible, and the reference PIN stored inside the chip of the card must be modified.

Such modification can be performed, according to current practices, by using a transaction apparatus, i.e. an ATM or a PoS (Point of Sale) terminal. These apparatuses can place a financial transaction between the card and a server. At a point of the finite state machine commanding the behavior of the transaction at the chip of the smart card, it is possible to execute a command script.

A command script can thus be designed to change the reference PIN inside the chip.

However, the decrease of cash usage leads to the decrease of the number of ATMs, which can make inconvenient for a cardholder to find one for changing his/her PIN code.

It is also possible to change the PIN code by using a Point of Sale terminal. This is however less practical because the cardholder may be subject to some time pressure (queue of waiting customers at the checkout of the merchant), and the screen of the PoS terminal may not be well suitable to communicate clear instructions to the cardholder.

It is therefore desirable to allow cardholders to change their PIN without using an ATM or a PoS terminal.

### SUMMARY OF THE INVENTION

The object of the present invention is to alleviate at least partly the above mentioned drawbacks.

This object is achieved with a method for changing a PIN code associated with a smart card, comprising steps
- transmitting a first sequence of commands from a mobile telecommunication device to said smart card; and receiving first transaction information in response,
- transmitting a selected part of said first transaction information from a distinct telecommunication device to a server; and transmitting a new PIN code to said server;
- generating at said server a script coding the change into said new PIN code and containing said new PIN code encrypted with a session key based at least on an element predicted from said selected part;
- transmitting said script to the mobile telecommunication device;
- transmitting a second sequence of commands from said mobile telecommunication device to said smart card, adapted to put said smart card in a state receptive to execution of scripts, and transmitting said script to said card for having said smart card executing said script for modifying a reference PIN code stored in a memory inside said smart card into said new PIN code.

Preferred embodiments comprise one or more of the following features, which can be taken separately or together, either in partial combination or in full combination.
- the transmissions between said mobile communication device and said smart card are performed according to a Near Field Communication, NFC, protocol;
- the transmissions between said mobile communication device and said smart card are performed thanks to a card reader apparatus;
- the server transmits said script to said mobile telecommunication device by first transmitting it to said distinct telecommunication device, displaying a graphical element encoding it on a screen associated with said telecommunication device; capturing said graphical element by a camera associated with said mobile telecommunication device, decoding said graphical element by said mobile telecommunication device to retrieve said script.
- said graphical element is a QR code.
- said script is transmitted directly from said server to said mobile telecommunication device via a software application dedicated to the issuer of said smart card and installed on said mobile telecommunication device .

Another aspect of the invention relates to a software application for changing a PIN code associated with a smart card, configured to, when deployed on a mobile telecommunication device:
- transmit a first sequence of commands from a mobile telecommunication device to said smart card, and receive first transaction information in response;
- display a selected part of said first transaction information on a screen of said mobile telecommunication device;
- receive a script containing an encrypted PIN code;
- transmit a second sequence of commands to said smart card, adapted to put said smart card in a state receptive to execution of scripts, and transmitting said script to said card for having said smart card executing said script for modifying a reference PIN code stored in a memory inside said smart card into said PIN code.

Such a software application may be embedded inside the mobile telecommunication device, and/or provided as a software product on media like a USB key, CD... or made available on the web.

Another aspect of the invention relates to a mobile telecommunication device comprising memory and processing means for executing the software application according to the previous claim.

Another aspect of the invention relates a server comprising means configured to:
- receive first transaction information from a browser executing on a distinct telecommunication device;
- receive a PIN code;
- generating at said server a script coding the change into said new PIN code and containing said new PIN code encrypted with a session key based at least on an element predicted from said selected part;
- transmitting said script to the mobile telecommunication device.

Another aspect of the invention relates to a system comprising a mobile telecommunication as previously defined, a server as previously defined and a distinct telecommunication device comprising a browser to access to said server.

Then, thanks to the invention, it becomes possible to change the PIN of one's card at any time. In particular, this does not require the cardholder to find an ATM or to move in a particular place to perform such an operation.

Furthermore, the change of PIN code can be performed at home, or in any other safe environments. This increases the overall security of the operation by avoiding any eavesdropping of people in a public environment

Furthermore, according to embodiments, the invention does not require any special equipment.

Product management regards it an interesting option to avoid providing postal mails containing the PIN for a new card, or if a cardholder forgot his PIN. Thanks to the invention, a new card could be produced with a random PIN nobody knows, and the cardholder just changes it into a PIN of his liking upon receipt of the card. The same if he forgot his PIN. PIN mailer production (incl. postage) costs a couple of Euro, which can be avoided thanks to the invention and reduce costs for banks.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows a contextual network architecture according to embodiments of the invention.
Fig. 2 shows a flow chart representing the data communication between network entities according to embodiments of the invention.
Figs. 3a and 3b show example screens of the telecommunication devices at certain steps of the process according to embodiments of the invention.
Figs. 4a and 4b show example screens of the telecommunication devices at other steps of the process according to embodiments of the invention.

### DETAILED DESCRIPTION OF THE INVENTION

The invention may address to a diversity of smart cards, but more particularly to payment cards compliant with the EMV standard.

EMV originally stood for "Europay, Mastercard, and Visa", the three companies that created the standard. EMV is a payment method based upon a technical standard for smart payment cards and for payment terminals and automated teller machines, ATM, that can accept them.

According to the EMV standard, the communication between the smart card and the terminal can be defined by ISO/IEC 7816 for contact cards, and ISO/IEC 14443 for contactless cards.

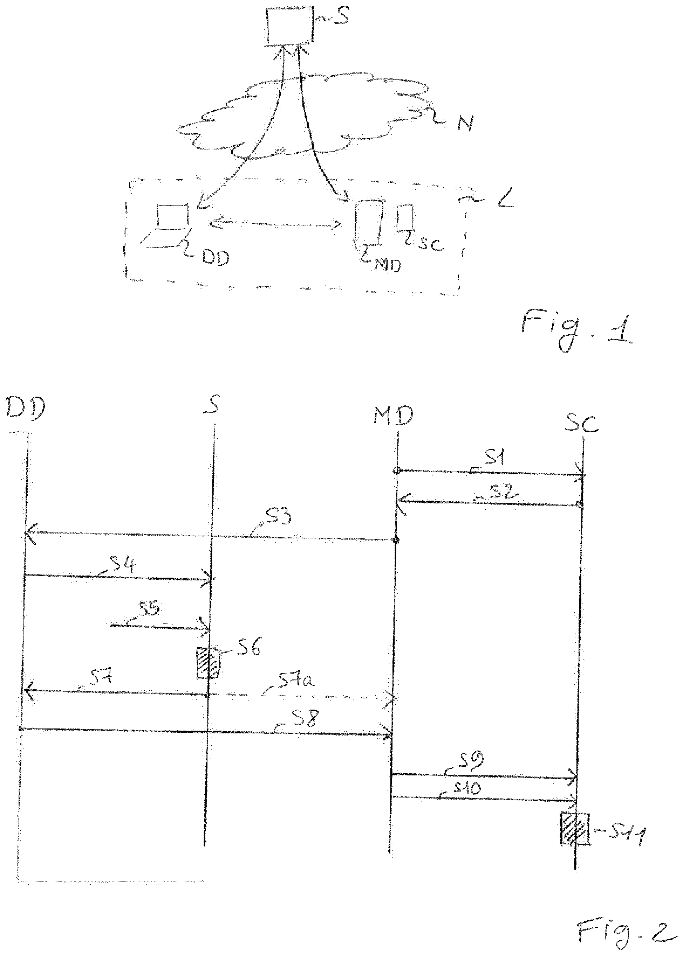

According to embodiments, the cardholder can use two distinct telecommunication devices, as depicted on FIG. 1.

A first device is a mobile telecommunication device MD, which can be a tablet or a smartphone. For such devices, software applications can be easily downloaded and installed automatically.

According to embodiments of the invention, a dedicated software application can be downloaded and installed to enable the mobile telecommunication device MD to perform according to method of the invention. In particular, this application can take in charge e.g. the interactions between the mobile device MD and the smart card SD, as well as with the cardholder.

The application may not be specific to a bank or card issuer but can be generic as it does not need to have access to private information of the cardholder or data depending on the issuer. Furthermore, the application is not required to access to a server S of the issuer.

The issuer is the legal entity responsible to issue and customize the smart card SC. It is in charge of handling the PIN (Personal Identification Number) associated with the smart card and any other personal information associated with the smart card and/or the cardholder.

A functional server S may serve as interface to the devices of the cardholder and embody the functions that are needed to perform the invention according to its embodiments. This functional server S may in practice be a single stand-alone server but also a farm of servers or functional entity deployed on a cloud. The invention does not depend on any embodiments of the server which is an architectural choice of the issuer.

The mobile telecommunication device MD, the smart card SC and the distinct telecommunication terminal DD are preferably co-located. At least, they should be collated during some steps of the method according to embodiments of the invention that will be described. This means they are all handleable by the cardholder without requiring him or her to move. For instance, they may all be located in a same room of an apartment or of an office premises L.

The distinct telecommunication device DD can be a computer configured to connect to a telecommunication network N like the internet. The server S may comprise a web server accessible to this distinct telecommunication device DD. In particular, this web server is a secured web site enabling the cardholder to check his/her account, perform some financial transactions, and, according to the invention, trigger the change of the PIN code of his or her smart card.

Accordingly, the invention allows to card issuer, generally a bank, to provide a new service available from the web front desk of the users.

FIG. 2 depicts the process and data transmissions between the actors according embodiments of the invention.

The cardholder may first connect on the web front desk, typically by entering a login and a password. He or she can then select the option to change the PIN code of his/her smart card.

The cardholder can then get some guidance about the process for changing the PIN code. In particular, s/he may be instructed to download the software application discussed here-above on his/her mobile device MD, in case this has not already been done, and to start it.

The cardholder is instructed to get the smart card SC in communication with the mobile telecommunication device MD.

According to an embodiment, this can be done by putting both within a close vicinity, e.g. by holding the card in physical contact with the mobile terminal. This would allow Near Field Communication, NFC, to take place.

According to another embodiment, the smart card can be inserted into a card reader electrically, or galvanically, and functionally connected to the mobile device MD. Such card reader can be secured and provided by the issuer. An example of such a card reader can be the product « Rabo scanner ». This device aims in authenticating internet banking activities and comes equipped with a camera for recognition of QR codes or other graphical elements. Other card readers exist.

Once started, the software application generates a first transaction T1 on the smart card SC, comprising the sending of a first sequence of commands. For instance a payment transaction can be generated with predetermined parameters so as to minimize the interactions of the cardholder and automatize the process. For example, the amount of the payment transaction can be set at zero, with currency set to euros, a date set to the current day, etc.

In step S1, a sequence of commands corresponding to this payment transaction can be transmitted. These commands may aim in selecting the default payment application installed in the smart card SC, properly instructed by the downloaded application, and initiating the transmission of the relevant information to the smart card by the established communication means (e.g. NFC, card reader...).

According to embodiments based on an EMV (Europay-MasterCard-Visa) standard, the payment application is selected by using the SELECT command, then the transaction is initialized by using the GET PROCESSING OPTIONS command. Then, the actual transaction can take place, by using the GENERATE AC command.

As a response to these commands by the smart card, some transaction information TI1 are generated and transmitted back, in a step S2, to the mobile telecommunication device MD. This transaction information, TI1 contains typically Application Cryptograms (AC) according to the EMV standards.

The transaction information TI1 may contain several types of information, including an Application Transaction Counter (ATC), a Message Authentication Code (MAC) cryptographically hashing the other fields of the transaction information TI1.

The ATC is stored in the memory of the EVM Chip, inside the smart card SC, and incremented upon each AC generation. Every transaction by the card is identified by a unique value of this Application Transaction Counter, ATC.

In a step S4, a selected part of the transaction information TI1 is transmitted to the server S from the distinct telecommunication device DD.

For doing this, in a step S3, the selected part of the transaction information TI1 is provided by the mobile device MD to the distinct telecommunication DD. According to embodiments, the selected part is displayed on a screen of the mobile telecommunication device MD. This selected part consists in all the information required by the issuer to predict the next Application Cryptograms, AC. Data elements which can change in the card without the issuer knowing ("dynamic data") must be provided to the server S.

These data elements include the ATC.

A more comprehensive list of the data elements are, according to current standards can be:
1. The application transaction counter, ATC, two bytes,
2. The script counter, four bits ,
3. The "script failed in this or a previous transaction" bit,
4. The "script received in this or a previous transaction" bit,
5. The offline PIN verification not performed" bit,
6. The "last online transaction not completed bit".

These data elements forms the selected part, provided to the server S, of the transaction information TI1 provided by the smart card SC.

The selected information can be displayed as a chain of hexadecimal digits.

When displayed, the cardholder can read the selected information and enter it on the distinct telecommunication device DD (through a keyboard, a touch board, etc.).

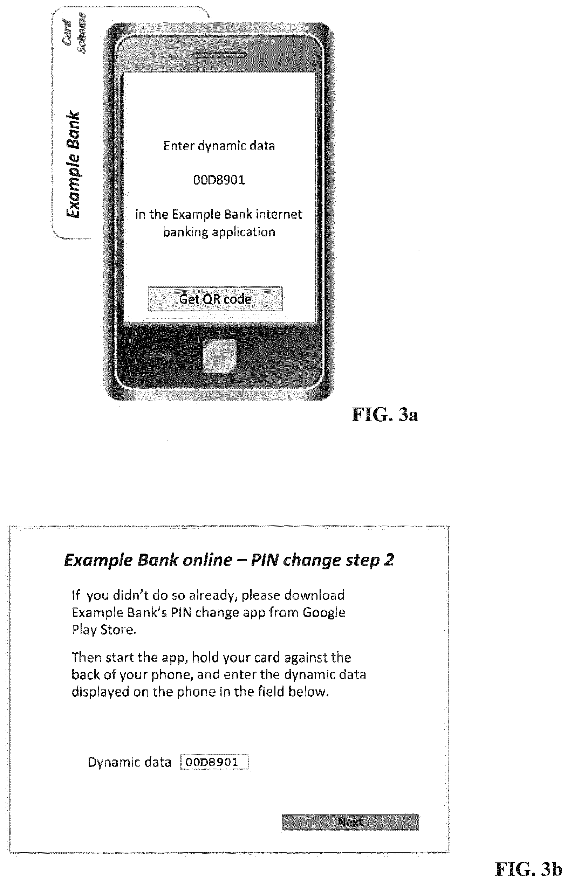

Figures 3a and 3b depict respectively screens of the mobile telecommunication device MD and of the distinct telecommunication device DD. The selected information are displayed in the mobile device MD as dynamic data, "00D8901", and the cardholder can read them and enter them on an appropriate field, "Dynamic data" on the figure 3b.

In the example given in Figure 3a, the two left most bytes (four characters) are the ATC. The other data elements mentioned in item 2-6 above are compressed into three characters and follows the ATC (this data, incorporated in a six byte data field, is returned in the reply to the GENERATE AC card command). So, for example. if we receive a field with the value 00D8901, we know that in order to calculate the application cryptogram in the next transaction, the ATC will have the value 00D8 + 1 = 00D9.

Furthermore, it might be that a previous PIN Change has failed and so we need to know the value of the "script failed in this or a previous transaction" bit". A similar reasoning applies to the other bits.

Once entered into the distinct telecommunication device DD, the latter can transmit them to the server S.

In addition, a new PIN code can be transmitted to the server as a step S5. It can be transmitted at the same time as the transaction information TI1, or it can be transmitted beforehand, for instance just after having selected the "change PIN" option on the web interface. This new PIN code can be chosen by the cardholder.

The transmission can be performed through a secured connection between the distinct telecommunication device DD and the server, or by other means.

In particular, the new PIN code can be transmitted to the server S by a telephone call to an Interactive Voice Response (IVR) system associated to the server S. The new PIN code can be vocalized by the cardholder and recognized by the IVR system, or transmitted by digital codes entered with the keyboard of the telephone.

Other possibilities can embody this transmission, which should be secured enough to avoid any malwares installed in any telecommunication devices.

In a step S6, the server S generates a script coding the change of the PIN code into the new PIN code.

Scripts are collections of secured smart card commands, which are typically sent by the issuer to the card application, via standard payment/branch networks to ATM, PoS or branch terminals as part of authorization or maintenance messages. Scripts may be used to change card application parameters in order to facilitate card behavioral changes.

In particular, scripts can be designed to change the reference PIN code stored inside the smart card, but, so far, the provisioning of the scripts and their execution are performed in ATM or PoS only.

According to the invention, then, such a script is generated at a server but aims in being provisioned and executed in the card, without making use of any ATM or PoS.

Typically, the scripts should be transmitted and executed at the card, when the latter is a state receptive for such reception and execution. According to the EMV standard, for instance, the behavior of the smart card obeys to a finite state machine. Only after completing a transaction, the card enters a state wherein it can receive and execute a script provided by the issuer.

Accordingly, according to the invention, the smart card shall be placed into such a state in order for the script configured to change the PIN code to be provisioned and executed at the card.

It shall be noted that the first transaction established previously cannot be maintained until this step for at least two reasons. First, in order for the transaction to be maintained, the cardholder would be required to keep the smart card in contact with mobile telecommunication device (in case of a NFC-based embodiment). Such an arrangement would be difficult to do for the cardholder and anyway not user friendly.

Second, standards as well as implementations provide some time-out delay, beyond which any transaction should be terminated. The delay is not compatible with the required time for implementing the various steps between the display of the selected part of the first transaction information TI1 and the receipt of the EMV script at the smart card SC.

Consequently,
- a second transaction T2 is generated at the mobile telecommunication device, with the smart card SC.
- the script is generated by encrypting the new PIN code by a derived from an element predicted from the selected part of the first transaction information, TI1,i.e. the dynamic data.

According to EMV specifications, the PIN within the PIN change script shall be enciphered with a SMC session key (SMC standing for "Secure Messaging Confidentiality").

This SMC session key derives from a respective master key in the possession of the issuer and from diversification elements as the AC. In particular, EMV book 2, version 4.3, dated 2011, reads:
"For the session keys used for secure messaging, the diversification value R is the Application Cryptogram returned in the response to the first GENERATE AC command followed by n-8 bytes of '00'"

So, in order to derive the SMC and SMI session keys needed for composition of the PIN change script, the issuer has to know the AC which will be generated in the card just before the script is going to be executed. Since without data connection between the smart card and the issuer, the card cannot transmit it, the issuer (i.e. server S) should be able to predict that AC, so that it can derive the correct session keys for secure messaging.

Accordingly, as already stated, the required element shall be comprised within the selected part of the Transaction Information, TI1, provided to the server S.

The prediction comprises notably the incrementing of the ATC (Application Transaction Counter). This correct ATC value is required both because it should be associated to the next transaction T2 to place but also for deriving the SMC session key for encrypting the PIN code.

Then, the script can be generated by the server S by:
- enciphering the new PIN code with the SMC session key;
- appending each command of the script by a MAC calculated with the SMI session key.

The script, containing the enciphered PIN, can then be transmitted to the mobile device MD.

According to an embodiment of the invention, the script is transmitted first, in a step S7, to the distinct telecommunication device DD. This can be done through the web front desk to which the cardholder is connected. Then, one can assumes he uses a web browser and the script can then be provided through HTTP protocol.

In particular, the script can be provided as a graphical element displayed on a web page of the front desk, for example as a QR code coding this script.

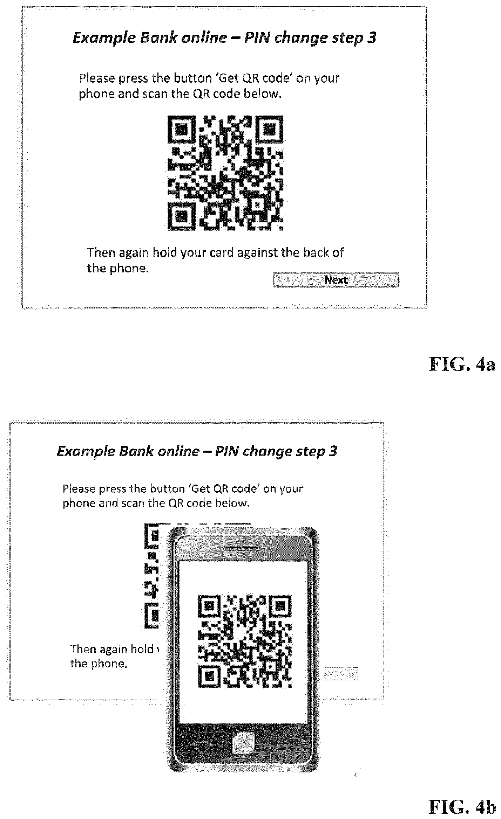

Figure 4a depicts an example of such a web page displaying a QR code.

In the next step, S8, the cardholder can transmit this graphical element to the mobile telecommunication device MD. It can then capture the graphical element by a camera associated with the mobile telecommunication device MD.

Figure 4b shows a mobile telecommunication device MD on the process of capturing the QR code displayed on the screen of the distinct telecommunication device DD.

Recent mobile telecommunication devices MD come with applications and services enabling the recognition of a QR code and its decoding.

Once decoded, the mobile telecommunication device MD can generate a second transaction T2 with the smart card SC.

According to another embodiment of the invention, the script can be communicated directly from the server S to the mobile telecommunication device MD, step 7a. For instance, a software application specifically handing the interactions of the cardholder with the bank/issuer can be installed in the mobile telecommunication device MD. Such an application can establish a secured data communication channel between the server S and the mobile telecommunication device MD, which can be used to download the script, containing the enciphered PIN code.

Then, the mobile device MD can generate a second transaction T2, aiming in provisioning the script to the smart card for execution. The second transaction T2 consists in a sequence of commands transmitted to the smart card SC, in a similar way than the first transaction T1. In particular, transaction parameters can be automatically set so as to minimize any interactions with the cardholder and let the process be as automatic ant transparent as possible (amount of the transaction, dates, etc.). As previously described, at the end of this transaction T2, the finite state machine of the smart card is put in a state appropriate for receiving and executing a script.

The script is then transmitted, step S10, to the smart card SC in a conventional way.

As the PIN code, contained within the script, had been enciphered with the appropriate SMC session key, i.e. based on predicted value corresponding to the actual dynamic value of this transaction T2 (e.g. right ATC...), it can be properly deciphered by the smart card SC.

The software operating system of the smart card can then execute the script, step S11, resulting in the modification of a reference PIN code stored inside a memory of the smart card SC.

Accordingly, the reference PIN code stored in the smart card is set to a new value corresponding to the new PIN code as set by the cardholder in step S5.

As a consequence, any further offline transaction placed with the smart card will be based on the new PIN code.

As for online transaction, as the new PIN code is communicated beforehand to the server S, the latter can update associated database, so that any further online transactions flowing to it can be based on this new PIN code. Accordingly, both offline and online PIN codes can be changed with a single process, according to the invention.

Thanks to the invention, the PIN codes can be changed without using an ATM or a PoS or any other apparatus available only on a public space. Furthermore, the PIN code can be changed in any private spaces (like at home or at one's office), by using only private equipments like one's mobile phone and another computer-like device.

Furthermore, the use of two distinct devices increases the security of the overall process. The process of the invention is robust regarding any malware installed on the devices of the cardholder, since all sensitive operations (encryptions...) are performed at server's side. In addition, it is not required to install specific applications to ensure security, letting the process relies only on the "as is" configurations of the cardholder's devices.

The solution does not rely neither on any bank/issuer-specific applications. It can run with only a generic application installed on the mobile device and a web server available at the server S. These two elements appear to be widely available and not blocking, whereas some banks and issuers do not provide necessary specific software applications.

The invention has been described with reference to preferred embodiments. However, many variations are possible within the scope of the invention.

## Claims

1. Method for changing a PIN code associated with a smart card, comprising steps
- transmitting (S1) a first sequence of commands from a mobile telecommunication device (MD) to said smart card (SC); and receiving (S2) first transaction information (TI) in response,
- transmitting (S4) a selected part of said first transaction information from a distinct telecommunication device (DD) to a server (S); and transmitting (S5) a new PIN code to said server (S);
- generating (S6) at said server (S) a script coding the change into said new PIN code and containing said new PIN code encrypted with a session key based at least on an element predicted from said selected part;
- transmitting (S7, S8, S7a) said script to the mobile telecommunication device (MD);
- transmitting (S9) a second sequence of commands from said mobile telecommunication device to said smart card (SC), adapted to put said smart card in a state receptive to execution of scripts, and transmitting (S10) said script to said card for having said smart card executing (S11) said script for modifying a reference PIN code stored in a memory inside said smart card into said new PIN code.

2. Method according to the previous claim, wherein the transmissions between said mobile communication device and said smart card are performed according to a Near Field Communication, NFC, protocol.

3. Method according to claim 1, wherein the transmissions between said mobile communication device and said smart card are performed thanks to a card reader apparatus.

4. Method according to any of the previous claim, wherein the server (S) transmits said script to said mobile telecommunication device by first transmitting (S7) it to said distinct telecommunication device (DD), displaying a graphical element encoding it on a screen associated with said telecommunication device; capturing (S8) said graphical element by a camera associated with said mobile telecommunication device, decoding said graphical element by said mobile telecommunication device to retrieve said script.

5. Method according to the previous claim, wherein said graphical element is a QR code.

6. Method according to any of the claims 1 to 3, wherein said script is transmitted (S7a) directly from said server (S) to said mobile telecommunication device (MD) via a software application dedicated to the issuer of said smart card and installed on said mobile telecommunication device (MD).

7. Software application for changing a PIN code associated with a smart card (SC), configured to, when deployed on a mobile telecommunication device (MD),
- transmit (S1) a first sequence of commands from a mobile telecommunication device (MD) to said smart card (SC), and receive (S2) first transaction information in response;
- display (S3) a selected part of said first transaction information on a screen of said mobile telecommunication device (MD);
- receive (S8, S7a) a script containing an encrypted PIN code;
- transmit (S9) a second sequence of commands to said smart card (SC), adapted to put said smart card in a state receptive to execution of scripts, and transmitting (S10) said script to said card for having said smart card executing (S11) said script for modifying a reference PIN code stored in a memory inside said smart card into said PIN code.

8. Mobile telecommunication device (MD) comprising memory and processing means for executing the software application according to the previous claim.

9. Server (S) comprising means configured to
- receive (S4) first transaction information from a browser executing on a distinct telecommunication device (DD);
- receive (S5) a PIN code;
- generating (S6) at said server (S) a script coding the change into said new PIN code and containing said new PIN code encrypted with a session key based at least on an element predicted from said selected part;
- transmit (S7, S8, S7a) said script to the mobile telecommunication device (MD).

10. System comprising a mobile telecommunication according to claim 8, a server according to claim 9 and a distinct telecommunication device comprising a browser to access to said server.

## Amended claims

### Amended claims in accordance with Rule 137(2) EPC.

1. Method for changing a PIN code associated with a smart card, comprising steps
- transmitting (S1) a first sequence of commands from a mobile telecommunication device (MD) to said smart card (SC); and receiving (S2) first transaction information (TI) in response,
- providing a selected part of said first transaction information by said mobile device to a distinct telecommunication device (DD);
- transmitting (S4) said selected part of said first transaction information from said distinct telecommunication device (DD) to a server (S); and transmitting (S5) a new PIN code to said server (S);
- generating (S6) at said server (S) a script coding the change into said new PIN code and containing said new PIN code encrypted with a session key based at least on an element predicted from said selected part;
- transmitting (S7, S8, S7a) said script to the mobile telecommunication device (MD);
- transmitting (S9) a second sequence of commands from said mobile telecommunication device to said smart card (SC), adapted to put said smart card in a state receptive to execution of scripts, and transmitting (S10) said script to said card for having said smart card executing (S11) said script for modifying a reference PIN code stored in a memory inside said smart card into said new PIN code.

2. Method according to the previous claim, wherein the transmissions between said mobile communication device and said smart card are performed according to a Near Field Communication, NFC, protocol.

3. Method according to claim 1, wherein the transmissions between said mobile communication device and said smart card are performed thanks to a card reader apparatus.

4. Method according to any of the previous claim, wherein the server (S) transmits said script to said mobile telecommunication device by first transmitting (S7) it to said distinct telecommunication device (DD), displaying a graphical element encoding it on a screen associated with said telecommunication device; capturing (S8) said graphical element by a camera associated with said mobile telecommunication device, decoding said graphical element by said mobile telecommunication device to retrieve said script.

5. Method according to the previous claim, wherein said graphical element is a QR code.

6. Method according to any of the claims 1 to 3, wherein said script is transmitted (S7a) directly from said server (S) to said mobile telecommunication device (MD) via a software application dedicated to the issuer of said smart card and installed on said mobile telecommunication device (MD).

7. Software application for changing a PIN code associated with a smart card (SC), configured to, when deployed on a mobile telecommunication device (MD),
- transmit (S1) a first sequence of commands from a mobile telecommunication device (MD) to said smart card (SC), and receive (S2) first transaction information in response;
- display (S3) a selected part of said first transaction information on a screen of said mobile telecommunication device (MD);
- receive (S8, S7a) a script containing an encrypted PIN code;
- transmit (S9) a second sequence of commands to said smart card (SC), adapted to put said smart card in a state receptive to execution of scripts, and transmitting (S10) said script to said card for having said smart card executing (S11) said script for modifying a reference PIN code stored in a memory inside said smart card into said PIN code.

8. Mobile telecommunication device (MD) comprising memory and processing means for executing the software application according to the previous claim.

9. Server (S) comprising means configured to
- receive (S4) first transaction information from a browser executing on a distinct telecommunication device (DD);
- receive (S5) a PIN code;
- generating (S6) at said server (S) a script coding the change into said new PIN code and containing said new PIN code encrypted with a session key based at least on an element predicted from said selected part;
- transmit (S7, S8, S7a) said script to the mobile telecommunication device (MD).

10. System comprising a mobile telecommunication according to claim 8, a server according to claim 9 and a distinct telecommunication device comprising a browser to access to said server.
